# EUROPEAN PATENT SPECIFICATION

(11) **EP 2 217 089 B1**
(45) Date of publication and mention of the grant of the patent: **29.02.2012**
(21) Application number: 08854124.8
(22) Date of filing: 27.11.2008
(51) Int. Cl.: A23K 1/18, A23K 1/16

(54) **COMPOSITIONS INTENDED TO INCREASE PIGLET APPETITE**
ZUSAMMENSETZUNGEN ZUR ERHÖHUNG DES APPETITS VON FERKELN
COMPOSITIONS DESTINÉES À ACCROÎTRE L'APPÉTIT DE PORCELETS

(30) Priority: 28.11.2007 EP 07121806
(43) Date of publication of application: 18.08.2010
(73) Proprietor: Exquim S.A., 08028 Barcelona (ES)
(72) Inventor: CRESPO, Javier, E-08950 Esplugues De Llobregat (Barcelona) (ES)
(74) Representative: Reitstötter - Kinzebach
(86) International application number: PCT/EP2008/066358
(87) International publication number: WO 2009/068622

(56) References cited:
- WO-A-2004/091307
- WO-A-2007/087735
- GB-A- 2 119 624
- JP-A- 10 146 156
- US-A- 4 542 031
- US-A1- 2005 241 656
- DATABASE WPI Week 200543 Thomson Scientific, London, GB; AN 2005-421562 XP002520293 & JP 2005 151928 A (HOODO KK) 16 June 2005 (2005-06-16)
- CALVO, ET AL.: "Natural Plant extracts and Organic Acids: Synergism and Implication on piglet's intestinal microbiota" BIOTECHNOLOGY, vol. 5, no. 2, 2006, pages 137-142, XP002501034

## Description

The present invention relates to compositions comprising aromatic substances contained in pig milk.

Nowadays, after several studies on piglets, we know that the voluntary level of food intake is influenced by different factors such as the ingredients and their digestibility, palatability, forms of presentation (type of processing), the systems and modes used for rationing, water availability, etc. In current intensive production conditions piglets must quickly adapt to the change from breast milk to compound feed, which affects their voluntary feed intake and therefore their nutrient intake; this change causes mediocre results regarding growth and the manifestation of digestive pathologies. In the past, digestive pathologies were prevented by the use of growth promoting antibiotics and metallic trace elements (Zn, Cu). The ban of antibiotic growth promoters in January of 2006 in the European Union and limitations on the use of Zn and Cu make it necessary to search for alternative solutions. The most interesting of these are prebiotics, probiotics, enzymes, acidifiers and plant extracts. A supplementary strategy to the alternatives mentioned above is the use of flavouring substances to increase voluntary feed intake by attraction and appetite.

It is known that it is possible to increase voluntary intake by incorporating sensory additives in feedstuffs that increase appetite. Thus, patent US4125629 describes a flavouring composition to be mixed with piglet feedstuffs consisting in aldehydes, alcohols, esters and terpenes. Patent US5906842 describes a composition that stimulates appetite in dairy cows, comprising a preparation of corn, lysine and methionine. Patent US6592924 describes flavouring combinations comprising alkylphenols and cyclohexanecarboxylic acids or their alkyl-substituted derivatives that can be added to feedstuffs for pets. Patent application EP174821 describes flavouring compositions to improve its acceptability to livestock, comprising n-hexanal, cis-3-hexen-1-ol, 1-octen-3-ol and beta-ionone, amongst other components. Patent application EP951840 describes flavouring compositions for feedstuffs containing 2-acetyl-2-thiazoline and its precursors, as well as other ingredients such as alkylated thiazolidines, 2-methyl-3-furanthiol and mercaptopentanone.

JP 10 146156 describes the addition of peach flavor to pellet feed for pigs. Peach flavour comprises ethyl n-butyrate, gamma-nonalactone, 2-methylbutene-3, gamma-undecalactone, benzaldehyde, maltol, and isocratic acid.

WO 2004/091307 describes animal feed additives which are claimed to protect animals from disease.

JP 2005 151928 describes an animal feed additive comprising bamboo or bamboo grass components having antimicrobial and antiviral properties.

The state of the art compositions may cause intolerance in animals since they contain components that are foreign to them. This aspect is extremely important when the animals to be fed have short lifetimes, which makes them more vulnerable to the intake of new substances.

In contrast, the great advantage of the compositions of the present invention is that all their ingredients except the liquid base (propylene glycol) are already present in the maternal milk, thus ensuring tolerance.

On the other hand, the ingredients of the present invention are easy to prepare for a person skilled in the art or can be purchased in the market, which represents an added advantage of the invention.

The compositions of the present invention can stimulate voluntary feed intake and thus improve the stress suffered by piglets during the transition from the sow's milk to solid feed in the form of complete feedstuffs. The compositions have been created by the combination of some of the flavouring substances found in colostrum and sow's milk by means of extractions and gas chromatography such that combining them in certain proportions, different to those they have in natural products, they surprisingly increase feed consumption in piglets when added to said feedstuffs.

In a first embodiment, the present invention relates to flavouring compositions comprising from 70 to 90% of propylene glycol, from 6 to 10% of vanillin, from 6 to 12% of gamma-nonalactone, from 0.5% to 1% of an acetic acid (C₄-C₅) linear or branched alkyl ester, from 0.05 to 0.25% of an orange essential oil, from 0.05 to 0.25% of a benzoic acid (C₁-C₅) linear or branched alkyl ester, from 0.05 to 0.25% of a cinnamic acid (C₁-C₃) linear or branched alkyl ester, from 0.25 to 1% of benzyl butyrate, and from 0.2 to 2% in total of one or two butyric acid (C₁-C₆) linear or branched alkyl esters.

C₁-C₆-Alkyl is a linear or branched alkyl group having from 1 to 6 carbon atoms. Examples include methyl, C₂-C₄-alkyl such as ethyl, n-propyl, isopropyl, n-butyl, 2-butyl, iso-butyl or tert-butyl, and also pentyl, 1-methylbutyl, 2-methylbutyl, 3-methylbutyl, 2,2-dimethylpropyl, 1-ethylpropyl, hexyl, 1,1-dimethylpropyl, 1,2-dimethylpropyl, 1-methylpentyl, 2-methylpentyl, 3-methylpentyl, 4-methylpentyl, 1,1-dimethylbutyl, 1,2-dimethylbutyl, 1,3-dimethylbutyl, 2,2-dimethylbutyl, 2,3-dimethylbutyl, 3,3-dimethylbutyl, 1-ethylbutyl, 2-ethylbutyl, 1,1,2-trimethylpropyl, 1,2,2-trimethylpropyl, 1-ethyl-1-methylpropyl, 1-ethyl-2-methylpropyl and mixtures of isomeric alkyl groups.

In another embodiment of the present invention the acetic acid (C₄-C₅) linear or branched alkyl ester is isoamyl acetate.

In another embodiment of the present invention the orange essential oil is Brazil orange essential oil.

In another embodiment of the present invention the benzoic acid (C₁-C₅) linear or branched alkyl ester is ethyl benzoate.

In another embodiment of the present invention the cinnamic acid (C₁-C₃) linear or branched alkyl ester is methyl cinnamate.

In another embodiment of the present invention the butyric acid (C₁-C₆) linear or branched alkyl esters are chosen from isoamyl butyrate and ethyl butyrate. In a particular embodiment, the composition of the invention comprises a mixture of isoamyl butyrate and ethyl butyrate.

In another embodiment of the present invention the composition comprises from 0.1 to 1% of a first butyric acid (C₁-C₆) linear or branched alkyl ester, in particular of isoamyl butyrate, and from 0.1 to 1% of a second butyric acid (C₁-C₆) linear or branched alkyl ester, in particular of ethyl butyrate.

In another embodiment of the present invention the composition comprises from 71.55 to 87.45% of propylene glycol.

In another embodiment of the present invention the composition comprises from 7.20 to 8.80% of vanillin.

In another embodiment of the present invention the composition comprises from 8.94 to 10.92% of gamma-nonalactone.

In another embodiment of the present invention the composition comprises from 0.73 to 0.89% of a acetic acid (C₄-C₅) linear or branched alkyl ester, in particular of isoamyl acetate.

In another embodiment of the present invention the composition comprises from 0.09 to 0.11 % of an orange essential oil, in particular of Brazil orange essential oil.

In another embodiment of the present invention the composition comprises from 0.09 to 0.11% of a benzoic acid (C₁-C₅) linear or branched alkyl ester, in particular of ethyl benzoate.

In another embodiment of the present invention the composition comprises from 0.09 to 0.11% of a cinnamic acid (C₁-C₃) linear or branched alkyl ester, in particular of methyl cinnamate.

In another embodiment of the present invention the composition comprises from 0.41 to 0.50% of benzyl butyrate.

In another embodiment of the present invention the composition comprises from 0.65 to 0.79% of a first butyric acid (C₁-C₆) linear or branched alkyl ester, in particular of isoamyl butyrate, and from 0.26 to 0.32% of a second butyric acid (C₁-C₆) linear or branched alkyl ester, in particular of ethyl butyrate.

In a particular embodiment of the present invention, the compositions essentially consist of propylene glycol, vanillin, gamma-nonalactone, an acetic acid (C₄-C₅) linear or branched alkyl ester, an orange essential oil, a benzoic acid (C₁-C₅) linear or branched alkyl ester, a cinnamic acid (C₁-C₃) linear or branched alkyl ester, benzyl butyrate, and one or two butyric acid (C₁-C₆) linear or branched alkyl esters, the proportion of ingredients other than those indicated above being 0% or below 0.1 %. In these compositions, it is preferred if the balance to 100% is made up by propylene glycol. Given the above proportions of vanillin, gamma-nonalactone, acetic acid (C₄-C₅) linear or branched alkyl ester, orange essential oil, benzoic acid (C₁-C₅) linear or branched alkyl ester, cinnamic acid (C₁-C₃) linear or branched alkyl ester, benzyl butyrate, and butyric acid (C₁-C₆) linear or branched alkyl ester(s), these compositions comprise up to 86.9% or up to 81.8% of propylene glycol.

In a further particular embodiment of the present invention, the composition comprises 0.1 % to 10%, 0.1 % to 5%, 0.1 % to 2.5%, 0.1 % to 1% or 0.1 % to 0.5% of one or more than one further ingredients. In these compositions too, it is preferred if the balance to 100% is made up by propylene glycol. Given the above proportions of vanillin, gamma-nonalactone, acetic acid (C₄-C₅) linear or branched alkyl ester, orange essential oil, benzoic acid (C₁-C₅) linear or branched alkyl ester, cinnamic acid (C₁-C₃) linear or branched alkyl ester, benzyl butyrate, and butyric acid (C₁-C₆) linear or branched alkyl ester(s), these compositions comprise up to 86.8% or up to 81.7% of propylene glycol.

The proportions indicated above (in %) refer to the total weight of the composition.

Another embodiment of the present invention relates to the use of the aforementioned compositions to increase piglet appetite.

In another embodiment of the present invention said compositions are used by adding them to feed at concentrations from 0.005 to 0.050%.

In another embodiment of the present invention said compositions are used preferably at concentrations from 0.015 to 0.035%.

The compositions can be prepared by mixing the ingredients following formulation procedures known by those skilled in the art.

The compositions of the present invention, when incorporated to feed in either liquid or solid (absorption on a solid base) form, increase the attraction and appetite of the feed, familiarising the piglets with the feed, improving the adaptation of their digestive systems and satisfying their nutritional needs.

The compositions of the present invention facilitate the transition from liquid feed (sow's milk) to solid feed (foodstuffs) in pigstock breeding, since they improve the voluntary feed intake of the animals.

The following example is provided as an illustration for a better understanding of the invention.

### ABBREVIATIONS

- CU: The amount of enzyme which liberates 0.128 micromoles of reducing sugars (glucose equivalents) from barley betaglucan per minute at pH 4.5 and 30°C
- Dif: Difference by weight in daily consumption
- EPU: The amount of enzyme which liberates 0.0083 micromoles of reducing sugars (xylose equivalents) from oat spelt xylan per minute at pH 4.7 and 30°C
- FYT: The amount of enzyme that liberates 1 micro-mol of inorganic ortho-phosphate per minute from sodium phytate at pH 5.5 and 37°C.
- df: Degrees of freedom to be introduced in the Student's t-test statistical tables
- pB-pA: Percentage of the mean consumption of feed B minus the percentage of the mean consumption of feed A
- Porc: Difference as a proportion on total weight
- Sig. (bilateral) .000: Significant test
- t: Student's t
- Tm: Tonne
- CFU: Number of colony-forming units

### DESCRIPTION OF THE DRAWINGS

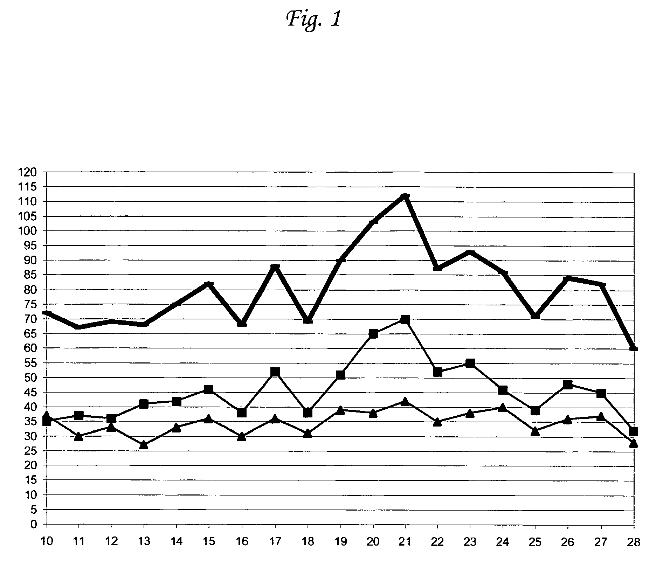

- Figure 1: (Fig. 1) Mean feed consumption per piglet and day is represented in grams on the γ-axis, such that the thick line expresses total consumption, the thin line marked by triangles expresses the mean consumption of feed A and the thin line marked by squares expresses the mean consumption of feed B. The x-axis represents the number of days of life for the piglets.

### Example: Test of feed consumption in piglets

The test was carried out in a farm with 280 reproductive sows that weans about 400 piglets per month. One of the delivery rooms with ten farrowing pens was used. The farrowing pens were exactly alike; the mother was in the centre of the farrowing pen in a piglet protection cage with a drinking trough and feeding trough and there were a drinking trough and two feeding troughs on the sides for the piglets.

10 multiparous Landrace x Large White mothers were used for the test. The test started with 76 ten-day old piglets and finished with 73 piglets at 28 days.

### Two-treatment design:

A. Flour-type feed with a standard composition (A, batch: 66569) consisting of aroma with touches of biscuit (milk, butter, vanilla)
B. Flour-type feed with a composition of the present invention (B), batch: 66044. The composition is detailed in Table 1.

**Table 1. Composition of the present invention (B), batch: 66044**

| *Ingredient* | *Proportion* |
|---|---|
| Propylene glycol | 79.50% |
| Vanillin | 8.00% |
| gamma-Nonalactone | 9.92% |
| Isoamyl acetate | 0.80% |
| Orange essential oil (Brazil) | 0.10% |
| Ethyl benzoate | 0.10% |
| Methyl cinnamate | 0.10% |
| Benzyl butyrate | 0.45% |
| Isoamyl butyrate | 0.73% |
| Ethyl butyrate | 0.30% |

Both feedstuffs contained the same ingredients in the same proportion, except for the flavouring composition, which was different for each preparation, added at a proportion of 350 mg/kg of feed.

The feedstuffs were first administered when the piglets were 10 days old and they were maintained until they were 28 days weaning off old (weaning). The two feeding trough methodology was used. Each farrowing pen had 2 feeding troughs designed for piglets. The piglet feeding troughs were located at each side of the mother's protection cage and the positions were alternated daily to prevent right or left bias effects. Table 2 shows feed ingredients and Table 3 shows their nutritional value.

**Table 2. Feed ingredients**

| *Ingredient* | *Proportion* |
|---|---|
| Extruded corn | 25.00% |
| Extruded wheat | 17.50% |
| Domestic Corn | 15.00% |
| Soybean protein concentrate | 15.00% |
| Partially delactosed whey Powder | 12.50% |
| Coconut and soybean vegetable oils | 2.60% |
| Sucrose | 2.50% |
| Potato protein | 2.50% |
| Egg flour | 1.00% |
| Dicalcium phosphate | 0.60% |
| Sodium bicarbonate | 0.30% |
| Sodium chloride | 0.10% |
| Colistin sulphate | 0.0075% |
| Zinc oxide | 0.30% |
| Amoxicillin trihydrate | 0.03% |
| Vitamin A | 18000 IU/Kg |
| Vitamin D3 | 2000 IU/Kg |
| Vitamin E (α-tocopherol) | 0.004% |
| Copper (Pentahydrate copper sulphate) | 0.0150% |
| E1614 - Phytase (EC 3.1.3.26) | 750 FYT |
| E16 - Endo-1,4-beta-glucanase (EC 3.2.1.4) | 500 CU |
| E17- Endo-1,4-beta-xylanase (EC 3.2.1.8) | 1500 EPU |
| E1702 Saccharomyces cerevisiae NCYC Sc47 | 10X10⁹ CFU |
| Calcium sodium salts of fatty acids, Lactic acid, Butylated hydroxytoluene, Orthoposphoric acid, Ethoxiquin, L-Lysine, L-Methionine, L-Threonine, L-Tryptophan | q.s. 100% |
| Flavouring composition | 0.0350% |

**Table 3. Nutritional value of feeds with compositions A and B**

| *Analytical components* | % |
|---|---|
| Moisture | 8.40 |
| Net Protein | 19.20 |
| Lysine | 1.45 |
| Net Cellulose | 2.80 |
| Net Fat | 7.00 |
| Net Ash | 5.40 |

Piglet consumption controls were performed daily per farrowing pen, from day 10 to day 28 of life. Consumption was obtained from the disappearance of feed by the difference in weight between the initial and final amounts in the feeding trough after 24 hours. It must be taken into account that the total amount of feed that disappears is not equal to that consumed, since part of this is wasted; the part that is wasted is considered equal for each one of the two feeds.

The data were analysed by means of a multiple comparison of means test, comparing the hypothesis that the mean of the two samples is different. The samples were paired, such that for each sample A there is a sample B obtained under the same conditions, thus eliminating random effects that affected both treatments equally and reducing unexplained variance in the data. The percentage of the difference in consumption was defined as a variable to eliminate the effect of the different amounts of piglets in each yard or the different consumption by each piglet during the test. Consumption results were analysed in totals per day and per yard and day. Table 4 shows the results for total consumptions per day for each feed in each of the 10 yards. The results show a greater preference towards the feed containing flavouring composition B.

**Table 4. Results. Total daily consumption for each feed in the 10 yards**

| *Days of life* | *Total consumption feed A (Kg)* | *Total consumption feed B (Kg)* | *A+B Consumption (Kg)* | *Consumption B-A (Kg)* | *Difference* (%) |
|---|---|---|---|---|---|
| 10 | 2.845 | 2.891 | 5.736 | 0.046 | 0.80 |
| 11 | 2.344 | 2.803 | 5.147 | 0.459 | 8.92 |
| 12 | 2.456 | 2.809 | 5.265 | 0.353 | 6.70 |
| 13 | 2.103 | 3.003 | 5.106 | 0.900 | 17.63 |
| 14 | 2.400 | 3.083 | 5.483 | 0.683 | 12.46 |
| 15 | 2.758 | 3.386 | 6.144 | 0.628 | 10.22 |
| 16 | 2.183 | 2.811 | 4.994 | 0.628 | 12.58 |
| 17 | 2.652 | 3.750 | 6.402 | 1.098 | 17.15 |
| 18 | 2.264 | 2.720 | 4.984 | 0.456 | 9.15 |
| 19 | 2.829 | 3.624 | 6.453 | 0.795 | 12.32 |
| 20 | 2.906 | 4.470 | 7.376 | 1.564 | 21.20 |
| 21 | 3.153 | 4.853 | 8.006 | 1.700 | 21.23 |
| 22 | 2.647 | 3.974 | 6.621 | 1.327 | 20.04 |
| 23 | 2.843 | 3.953 | 6.796 | 1.110 | 16.33 |
| 24 | 2.999 | 3.401 | 6.400 | 0.402 | 6.28 |
| 25 | 2.390 | 3.158 | 5.548 | 0.768 | 13.84 |
| 26 | 2.774 | 3.968 | 6.742 | 1.194 | 17.71 |
| 27 | 3.004 | 3.510 | 6.514 | 0.506 | 7.77 |
| 28 | 2.231 | 2.546 | 4.777 | 0.315 | 6.59 |

Tables 5 and 6 show the statistical study. The daily difference is significantly greater than zero both when expressed by weight of consumption and in percentage on total weight; we can thus assert that one feed is preferred to the other. The mean of the daily differences is 12.58% with a confidence interval of 95%.

**Table 5. Statistical study**

| | *N* | *Mean* | *Standard Deviation* | *Standard Error of the Mean* |
|---|---|---|---|---|
| Dif | 19 | 0.78589 | 0.445639 | 0.102237 |
| Porc | 19 | 0.12575 | 0.057544 | 0.013202 |

**Table 6. Statistical study**

| | Test Value = 0 | | | | | |
|---|---|---|---|---|---|---|
| | t | df | Sig. (bilateral) | Difference of means | 95% Confidence interval for the difference | |
| | | | | | Lower | Upper |
| Dif | 7.687 | 18 | 0.000 | 0.785895 | 0.57110 | 1.00069 |
| Porc | 9.526 | 18 | 0.000 | 0.125754 | 0.09802 | 1.15349 |

Table 7 shows the results for the percentages of daily consumption for each yard. The variable studied was the percentage of consumption of each feed with respect to the total. The statistical study (Table 8) was significant.

**Table 7. Results. Percentages of daily consumption per yard**

| *Days of life* | *Mean consumption feed A* (%) | *Mean consumption feed B* (%) | *Total feed consumed B-A(%)* |
|---|---|---|---|
| 10 | 53.346 | 46.654 | -6.692 |
| 11 | 48.765 | 51.235 | 2.471 |
| 12 | 46.504 | 53.496 | 6.992 |
| 13 | 39.726 | 60.274 | 20.549 |
| 14 | 43.411 | 56.589 | 13.178 |
| 15 | 44.671 | 55.329 | 10.659 |
| 16 | 44.335 | 55.665 | 11.329 |
| 17 | 41.704 | 58.296 | 16.593 |
| 18 | 43.449 | 56.551 | 13.102 |
| 19 | 43.751 | 56.249 | 12.499 |
| 20 | 41.018 | 58.982 | 17.964 |
| 21 | 38.599 | 61.401 | 22.802 |
| 22 | 42.223 | 57.777 | 15.554 |
| 23 | 41.470 | 58,530 | 17.060 |
| 24 | 46.583 | 53,417 | 6.833 |
| 25 | 45.215 | 54.785 | 9.569 |
| 26 | 46.263 | 53.737 | 7.474 |
| 27 | 40.642 | 59.358 | 18.716 |
| 28 | 46.989 | 53.011 | 6.021 |

**Table 8. Statistical study. Related sample test**

| Related differences | | | | | | t | df | Bilateral Sig. |
|---|---|---|---|---|---|---|---|---|
| | Mean | Standard Deviation | Standard Error of the Mean | 95% Confidence interval for the difference | | | | |
| | | | | Lower | Upper | | | |
| [1] | 0.1171965 | 0.2503898 | 0.181652 | 0.0813639 | 0.1530290 | 6.452 | 189 | 0.000 |

| | | | | | | | | |
|---|---|---|---|---|---|---|---|---|
| [1] pB-pA | | | | | | | | |

Figure 1 (Fig. 1) shows feed consumption according to the days of life of the animals.

The results of the test and the corresponding statistical study show that there is a significant difference, with a 95% confidence interval, in the difference of consumption between the piglets that preferred feed B (feed with a composition of the present invention) versus feed A (feed with a standard composition).

The greater consumption of feed indicates a faster development of the gastrointestinal mucosa and therefore a greater absorption of nutrients.

## Claims

1. A flavouring composition comprising from 70 to 90% of propylene glycol, from 6 to 10% of vanillin, from 6 to 12% of gamma-nonalactone, from 0.5% to 1% of an acetic acid (C₄-C₅) linear or branched alkyl ester, from 0.05 to 0.25% of an orange essential oil, from 0.05 to 0.25% of a benzoic acid (C₁-C₅) linear or branched alkyl ester, from 0.05 to 0.25% of a cinnamic acid (C₁-C₃) linear or branched alkyl ester, from 0.25 to 1% of benzyl butyrate, and from 0.2 to 2% in total of one or two butyric acid (C₁-C₆) linear or branched alkyl esters.

2. A composition according to claim 1, wherein the acetic acid (C₄-C₅) linear or branched alkyl ester is isoamyl acetate.

3. A composition according to claim 1, wherein orange essential oil is Brazil orange essential oil.

4. A composition according to claim 1, wherein the benzoic acid (C₁-C₅) linear or branched alkyl ester is ethyl benzoate.

5. A composition according to claim 1, wherein the cinnamic acid (C₁-C₃) linear or branched alkyl ester is methyl cinnamate.

6. A composition according to claim 1, wherein the butyric acid (C₁-C₆) linear or branched alkyl esters are chosen from isoamyl butyrate and ethyl butyrate.

7. A composition according to claim 6, wherein the composition comprises from 0.1 to 1% of isoamyl butyrate and from 0.1 to 1% of ethyl butyrate.

8. A composition according to any one of claims 1 to 7 wherein the composition comprises from 70 to 86.9%, 71.55 to 87.45%, or 71.55 to 81.8% of propylene glycol.

9. A composition according to any one of claims 1 to 8 wherein the composition comprises from 7.20 to 8.80% of vanillin.

10. A composition according to any one of claims 1 to 9 wherein the composition comprises from 8.94 to 10.92% of gamma-nonalactone.

11. A composition according to any one of claims 1 to 10 wherein the composition comprises
a) from 0.73 to 0.89% of isoamyl acetate; or
b) from 0.09 to 0.11% of Brazil orange essential oil; or
c) from 0.09 to 0.11% of ethyl benzoate; or
d) from 0.09 to 0.11% of methyl cinnamate; or
e) from 0.41 to 0.50% of benzyl butyrate; or
f) from 0.65 to 0.79% of isoamyl butyrate and 0.26 to 0.32% of ethyl butyrate; or
g) any combination of a) to f).

12. The use of a composition according to any one of claim 1 to 11 to increase piglet appetite.

13. The use according to claim 12 wherein the composition is added to the feed at a concentration of from 0.005 to 0.050%.

14. The use according to claim 13 wherein the concentration is of from 0.015 to 0.035%.

15. A method of increasing piglet appetite which comprises adding a composition according to any one of claim 1 to 11 to the feed.

## Patentansprüche

1. Aromastoffzusammensetzung, umfassend 70 bis 90 % Propylenglykol, 6 bis 10 % Vanillin, 6 bis 12 % gamma-Nonalacton, 0,5 bis 1 % eines Esters der Essigsäure mit linearem oder verzweigtem (C₄-C₅)-Alkyl, 0,05 bis 0,25 % eines ätherischen Orangenöls, 0,05 bis 0,25 % eines Esters der Benzoesäure mit linearem oder verzweigtem (C₁-C₅)-Alkyl, 0,05 bis 0,25 % eines Esters der Zimtsäure mit linearem oder verzweigtem (C₁-C₃)-Alkyl, 0,25 bis 1 % Benzylbutyrat und insgesamt 0,2 bis 2 % eines oder zweier Ester(s) der Buttersäure mit linearem oder verzweigtem (C₁-C₆)-Alkyl.

2. Zusammensetzung nach Anspruch 1, wobei es sich bei dem linearen oder verzweigten Essigsäure-(C₄-C₅)-alkylester um Isoamylacetat handelt.

3. Zusammensetzung nach Anspruch 1, wobei es sich bei dem ätherischen Orangenöl um brasilianisches ätherisches Orangenöl handelt.

4. Zusammensetzung nach Anspruch 1, wobei es sich bei dem linearen oder verzweigten Benzoesäure-(C₁-C₅)-alkylester um Ethylbenzoat handelt.

5. Zusammensetzung nach Anspruch 1, wobei es sich bei dem linearen oder verzweigten Zimtsäure-(C₁-C₃)-alkylester um Methylcinnamat handelt.

6. Zusammensetzung nach Anspruch 1, wobei der lineare oder verzweigte Buttersäure-(C₁-C₆)-alkylester ausgewählt ist unter Isoamylbutyrat und Ethylbutyrat.

7. Zusammensetzung nach Anspruch 6, wobei die Zusammensetzung 0,1 bis 1 % Isoamylbutyrat und 0,1 bis 1 % Ethylbutyrat umfasst.

8. Zusammensetzung nach einem der Ansprüche 1 bis 7, wobei die Zusammensetzung 70 bis 86,9 %, 71,55 bis 87,45 %, oder 71,55 bis 81,8 % Propylenglykol umfasst.

9. Zusammensetzung nach einem der Ansprüche 1 bis 8, wobei die Zusammensetzung 7,20 bis 8,80 % Vanillin umfasst.

10. Zusammensetzung nach einem der Ansprüche 1 bis 9, wobei die Zusammensetzung 8,94 bis 10,92 % gamma-Nonalacton umfasst.

11. Zusammensetzung nach einem der Ansprüche 1 bis 10, wobei die Zusammensetzung umfasst
a) 0,73 bis 0,89 % Isoamylacetat; oder
b) 0,09 bis 0,11 % brasilianisches ätherisches Orangenöl; oder
c) 0,09 bis 0,11 % Ethylbenzoat; oder
d) 0,09 bis 0,11 % Methylcinnamat; oder
e) 0,41 bis 0,50 % Benzylbutyrat; oder
f) 0,65 bis 0,79 % Isoamylbutyrat und 0,26 bis 0,32 % Ethylbutyrat; oder
g) beliebige Kombination von a) bis f).

12. Verwendung einer Zusammensetzung nach einem der Ansprüche 1 bis 11 zur Erhöhung des Appetits von Ferkeln.

13. Verwendung nach Anspruch 12, wobei die Zusammensetzung in einer Konzentration von 0,005 bis 0,050 % zum Futter hinzugefügt ist.

14. Verwendung nach Anspruch 13, wobei die Konzentration 0,015 bis 0,035 % beträgt.

15. Verfahren zur Erhöhung des Appetits von Ferkeln, welches das Hinzufügen einer Zusammensetzung nach einem der Ansprüche 1 bis 11 zum Futter umfasst.

## Revendications

1. Composition aromatisante comprenant de 70% à 90% de propylène glycol, de 6% à 10% de vanilline, de 6% à 12% de gamma-nonalactone, de 0,5% à 1% d'un ester d'alkyle ramifié ou linéaire en (C₄-C₅) de l'acide acétique, de 0,05% à 0,25% d'une huile essentielle d'orange, de 0,05% à 0,25% d'un ester d'alkyle ramifié ou linéaire en (C₁-C₅) de l'acide benzoïque, de 0,05% à 0,25% d'un ester d'alkyle ramifié ou linéaire en (C₁-C₃) de l'acide cinnamique, de 0,25% à 1% de butyrate de benzyle, et de 0,2% à 2% au total d'un ou de deux esters d'alkyle ramifié ou linéaire en (C₁-C₆) de l'acide butyrique.

2. Composition selon la revendication 1, dans laquelle l'ester d'alkyle ramifié ou linéaire en (C₄-C₅) de l'acide acétique est l'acétate d'isoamyle.

3. Composition selon la revendication 1, dans laquelle l'huile essentielle d'orange est une huile essentielle d'orange du Brésil.

4. Composition selon la revendication 1, dans laquelle l'ester d'alkyle ramifié ou linéaire en (C₁-C₅) de l'acide benzoïque est le benzoate d'éthyle.

5. Composition selon la revendication 1, dans laquelle l'ester d'alkyle ramifié ou linéaire en (C₁-C₃) de l'acide cinnamique est le cinnamate de méthyle.

6. Composition selon la revendication 1, dans laquelle les esters d'alkyle ramifié ou linéaire en (C₁-C₆) de l'acide butyrique sont choisis parmi le butyrate d'isoamyle et le butyrate d'éthyle.

7. Composition selon la revendication 6, dans laquelle la composition comprend de 0,1% à 1% de butyrate d'isoamyle et de 0,1% à 1% de butyrate d'éthyle.

8. Composition selon l'une quelconque des revendications 1 à 7 dans laquelle la composition comprend de 70% à 86,9%, de 71,55% à 87,45%, ou de 71,55% à 81,8% de propylène glycol.

9. Composition selon l'une quelconque des revendications 1 à 8 dans laquelle la composition comprend de 7,20% à 8,80% de vanilline.

10. Composition selon l'une quelconque des revendications 1 à 9 dans laquelle la composition comprend de 8,94% à 10,92% de gamma-nonalactone.

11. Composition selon l'une quelconque des revendications 1 à 10 dans laquelle la composition comprend :
a) de 0,73% à 0,89% d'acétate d'isoamyle ; ou
b) de 0,09% à 0,11% de l'huile essentielle d'orange du Brésil ; ou
c) de 0,09% à 0,11% de benzoate d'éthyle ; ou
d) de 0,09% à 0,11% de cinnamate de méthyle ; ou
e) de 0,41% à 0,50% de butyrate de benzyle ; ou
f) de 0,65% à 0,79% du butyrate d'isoamyle et de 0,26% à 0,32% du butyrate d'éthyle ; ou
g) l'une des combinaisons de a) à f).

12. Utilisation d'une composition selon l'une quelconque des revendications 1 à 11 destinée à augmenter l'appétit d'un porcelet.

13. Utilisation selon la revendication 12 dans laquelle la composition est ajoutée à la nourriture en une concentration comprise entre 0,005% et 0,050%.

14. Utilisation selon la revendication 13 dans laquelle la concentration est comprise entre 0,015% et 0,035%.

15. Procédé permettant d'augmenter l'appétit d'un porcelet qui comprend l'ajout à sa nourriture d'une composition selon l'une quelconque des revendications 1 à 11.
